# EUROPEAN PATENT APPLICATION

(11) **EP 2 518 391 A2**
(43) Date of publication of application: **31.10.2012**
(21) Application number: 12165540.1
(22) Date of filing: 25.04.2012
(51) Int. Cl.: F21S 8/10, F21V 7/00, F21V 13/04, F21Y 101/02, F21W 101/02

(54) **Vehicle lamp**

(30) Priority: 27.04.2011 JP 2011099072
(71) Applicant: Koito Manufacturing Co., Ltd., Tokyo 108-8711 (JP)
(72) Inventor: Nakada, Asami, SHIZUOKA-SHI, SHIZUOKA (JP)
(74) Representative: Intès, Didier Gérard André

(57) **Abstract**

A vehicle lamp (1) includes: at least one light source (2, 3) which emits light to the front of the lamp; at least one main reflector (10) which projects the light from the light source (2, 3) to the front of the lamp and on which a plurality of primary reflecting surfaces (11, 12) are aligned; and at least one sub-reflector (20) which is disposed in a position lying in front of the light source (2, 3) and which includes a plurality of secondary reflecting surfaces (21) which reflect the light from the light source (2, 3) towards the corresponding primary reflecting surfaces (11, 12). The secondary reflecting surfaces (21) are each ellipsoidal. The secondary reflecting surfaces (21) are provided on the sub-reflector (20) so that their respective first focal points are positioned at the light source or in the vicinity thereof and their respective second focal points are aligned along a shape which corresponds to the main reflector (10).

## Description

### BACKGROUND

Various designs of vehicle lamps have been proposed to enhance the appearance thereof.

For example, JP-A-2009-295552 proposes a vehicle lamp in which light is guided from a light source to a ring-shaped light emitting element, so that the ring-shaped light emitting element is illuminated. Additionally, JP-A-2010-267468 proposes a technique according to which LENDS are disposed individually at focal points of four paraboloidal reflectors which are aligned integrally in a straight line into a quadruple reflector and the quadruple reflector is illuminated into a straight line.

When the ring-shaped light emitting element described in JP-A-2009-295552 is used, however, the intensity of light from the light source is attenuated in the light emitting element, and therefore, the illuminance is reduced. Additionally, light is caused to enter from an end face of ring-shape light emitting element. This requires the light source to be provided to a side of the ring-shaped light emitting element, and therefore, a space where to dispose the light source needs to be secured at the side of the ring-shaped light emitting element. Consequently, since an area where no light is emitted is produced at the side of the ring-shaped light emitting element, there is imposed a limitation in design that this approach cannot be adopted when attempting to illuminate the vehicle lamp in whole.

Additionally, when the light sources are provided individually for the plurality of light emitting surfaces as done in JP-A-2010-267468, there is a problem that the wiring for illuminating the plurality of light sources becomes complex or that the increase in cost cannot be avoided due to the provision of the plurality of light sources.

### SUMMARY

An object of the present invention is to provide a vehicle lamp which can provide sufficient illuminance with as few light sources as possible and which is well designed.

Some embodiments of the present invention are as recited in any one of the appended claims.

According to the vehicle lamp of the present invention, light from the at least one light source can be reflected efficiently by the at least one sub-reflector which includes the secondary reflecting surfaces in which the respective second focal points are aligned along the shape which correspond to the main reflector so as to be projected to the front from the main reflectors. Consequently, the vehicle lamp can be provided in which the main reflectors which are designed into the complex shape to enhance the design thereof can be illuminated brightly with as few the light sources as possible.

### BRIEF DESCRIPTION OF THE DRAWINGS

A general configuration that implements various features of the invention will be described with reference to the drawings. The drawings and the associated descriptions are provided to illustrate some embodiments of the invention and thus do not limit the scope of the invention.
Fig. 1 is a front view of a vehicle lamp according to an embodiment of the invention.
Fig. 2 is a sectional view taken along the line II-II in Fig. 1.
Fig. 3 is a sectional view taken along the line III-III in Fig. 1.
Fig. 4 is a front view of the vehicle lamp according to the embodiment of the invention.
Fig. 5 is a sectional view that is similar to the view of Fig. 3, and that represents a vehicle lamp according to a modified example of the invention.

### DETAILED DESCRIPTION OF THE EMBODIMENTS

Hereinafter, a vehicle lamp 1 according to a non-limitative, exemplary embodiment of the invention will be described by reference to the drawings.

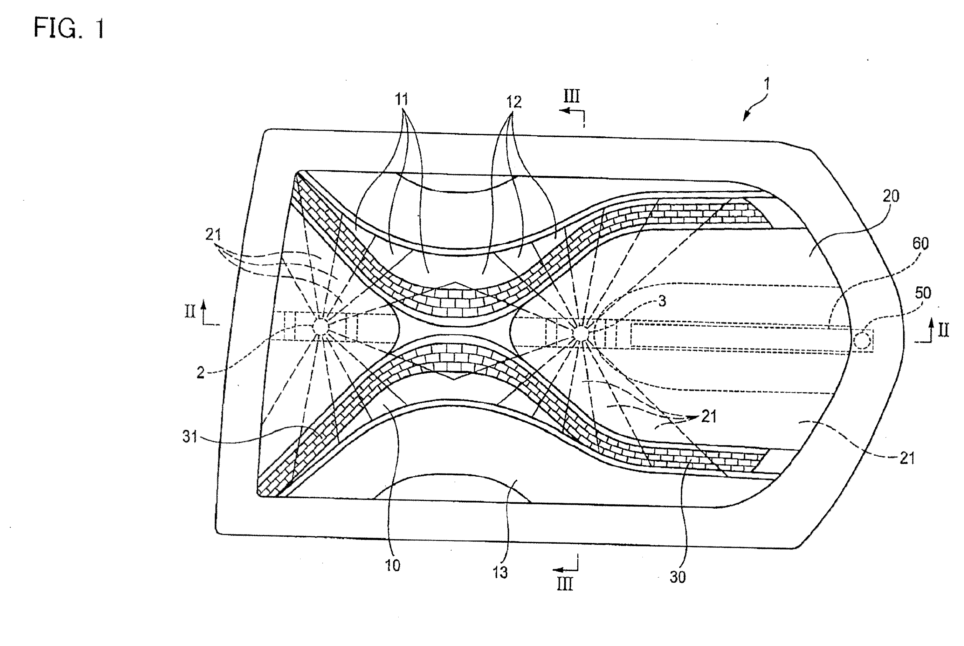

Fig. 1 is a front view of a vehicle lamp 1. As shown in Fig. 1, the vehicle lamp 1 is configured so that light from a plurality of (two in this embodiment illustrated) LEDs (which are particular examples of light sources) 2, 3 is reflected at sub-reflectors 20, and further, reflection light from the sub-reflectors 20 are reflected to the front of the lamp by main reflectors 10 which are formed into a belt-like shape, whereby reflection light reflected on the main reflectors 10 is emitted to the front of the lamp via an inner lens 30.

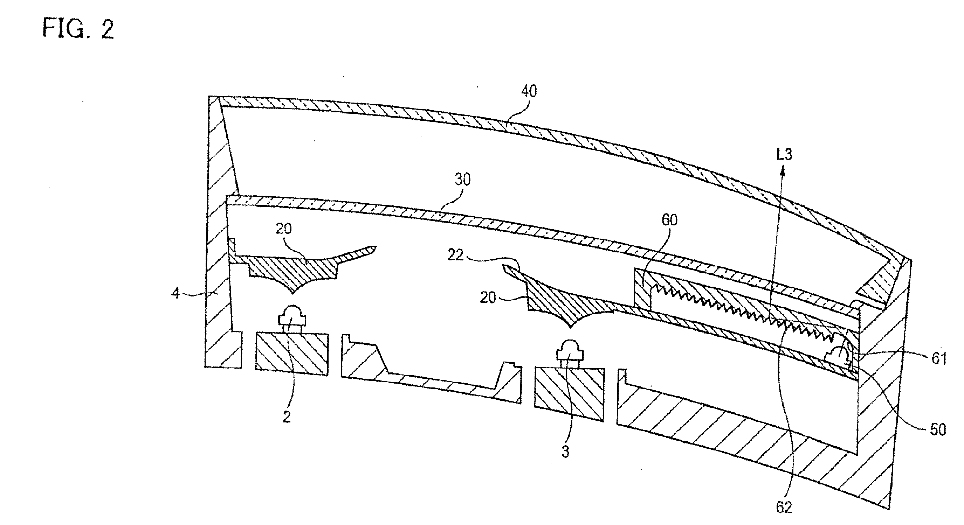

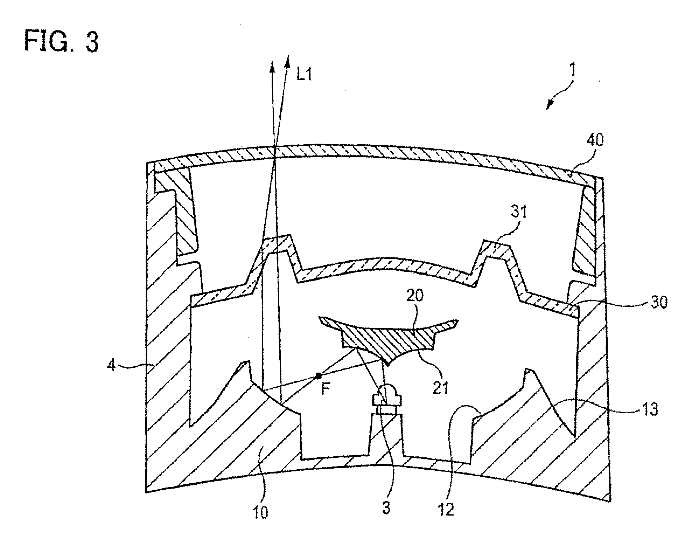

Fig. 2 is a sectional view of the vehicle lamp taken along the line II-II in Fig. 1, and Fig. 3 is a sectional view of the vehicle lamp taken along the line III-III in Fig. 1.

As shown in Figs. 2, 3, a lamp compartment of the vehicle lamp 1 is formed by a substantially box-shaped frame 4 which is opened at a front side of the lamp and a front cover 40 which is disposed so as to cover the open side of the frame 4. In this lamp compartment, the LEDs 2, 3, which are particular examples of light sources, are mounted on the frame 4 so that light emitting surfaces thereof are oriented to the front (upwards in Figs. 2, 3) of the vehicle lamp 1, whereby light is emitted to the front of the lamp.

Referring to Figs. 1 ann 3, main reflectors 10 are formed integrally with a bottom side of the flame 4 (with a back side of the frame 4 that is opposite the front side of the lamp, according to the example shown in Fig. 3) so as to lie to sides of the LEDs 2, 3. Pluralities of primary reflecting surfaces 11, 12 are formed on the main reflectors 10 so as to be oriented to the front of the lamp so that light from the LEDs 2, 3 is projected to the front of the vehicle lamp 1.

In the present embodiment, the pluralities of primary reflecting surfaces 11, 12 are aligned in a linear fashion so that the main reflectors 10 are formed into a belt-like shape in whole.

For instance, as shown in Fig. 1, each of the main reflectors 10 may have, when viewed from the front of the lamp, an outer circumferential edge that has a curved portion which becomes closer, in the vertical direction of the lamp, to the light source 2, 3 than other portions of said circumferential edge.

Each of the primary reflecting surfaces 11, 12 may have, when viewed from the front of the lamp, an outer circumferential edge that is provided in the continuity of the outer circumferential edge of any other, adjacent reflecting surface 11, 12. More generally, the main reflectors 10 may be formed so that their respective primary reflecting surfaces 11, 12 lie continuous with each other.

In addition, as shown in the example of Fig. 1, each of the primary reflecting surfaces 11, 12 may have, when viewed from the front of the lamp, two opposite, radial edges, each of which radially projects toward the corresponding light source 2, 3.

As shown in Fig. 1, the plurality of primary reflecting surfaces 11 are formed on the main reflector 10 so as to correspond to the LED 2 which constitutes the left-hand side LED, while the plurality of primary reflecting surfaces 12 are formed on the main reflector 10 so as to correspond to the LED 3 which constitutes the right-hand side LED when Fig. 1 is seen from the front. The primary reflecting surfaces 11, 12 are each formed into a stair step-like fashion continuously so that the respective reflecting surfaces are oriented towards the LEDs 2, 3.

Additionally, as shown in Fig. 1, these pluralities of primary reflecting surfaces 11, 12 are arranged in the linear fashion in whole, so that the main reflectors 10 are formed into the belt-like shape in whole. In this way, the main reflectors 10 of this embodiment adopt a curvilinear design to enhance the design thereof. Areas on the bottom side of the frame 4 where the primary reflecting surfaces 11, 12 are not formed are mirror-finished, so as to enhance the aesthetic properties of the vehicle lamp 1 in whole.

Sub-reflectors 20 are disposed in front of the LEDs 2, 3, respectively. Pluralities of secondary reflecting surfaces 21 are formed on the sub-reflectors 10 so as to be oriented to the rear of the lamp so that light from the LEDs 2, 3 is reflected towards the corresponding primary reflecting surfaces 11, 12. According to the present embodiment, the total number of secondary reflecting surfaces 21 is equal to the total number of first reflecting surfaces 11, 12.

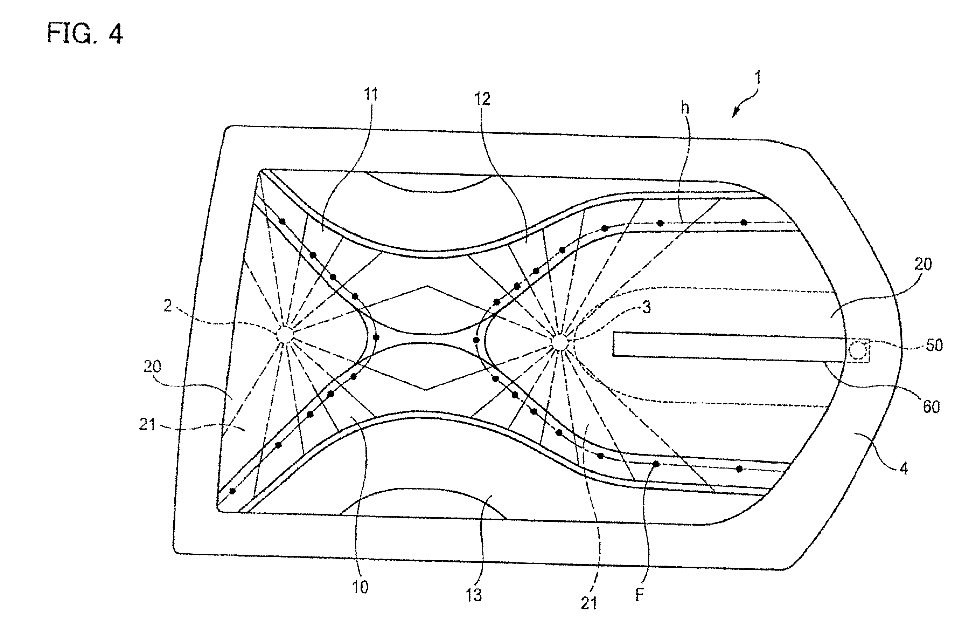

As shown in Fig. 3, the secondary reflecting surface 21 is formed into an ellipsoidal shape in which a first focal point is positioned at the LED 2 or 3 or in the vicinity thereof. As shown in Fig. 4, as a whole, the sub-reflector 20 is configured so that a group of secondary focal points of the plurality of secondary reflecting surfaces 21 are disposed in such a manner that an imaginary curve h which passes through the group of secondary focal points has a shape which corresponds to the shape of the main reflector 10. Consequently, the secondary reflecting surfaces 21 can reflect light from the LEDs 2, 3 towards the corresponding primary reflecting surfaces 11, 12 as intended. Fig. 4 is a front view of the vehicle lamp 1 with the front cover 40 and an inner lens 30 omitted for the sake of a better understandable illustration of the disposition of the second focal points of the secondary reflecting surfaces 21.

In this embodiment, the left-hand side LED 2, the primary reflecting surfaces 11 of the main reflector 10 and the sub-reflector 20 constitute one optical system, and the right-hand side LED 3, the primary reflecting surfaces 12 of the main reflector 10 and the sub-reflector 20 constitute another optical system.

The reflector 10 which includes the primary reflecting surfaces 11 and the reflector 10 which includes the primary reflecting surfaces 12 are disposed adjacent to each other so that the primary reflecting surfaces 11 and the primary reflecting surfaces 12, which belong to different optical systems, are continuous with each other, and the reflectors 10 are integrated into a belt-like shape in whole. Even in the event that the vehicle lamp 1 includes several optical systems in the way described above, the primary reflecting surfaces 11 of one optical system, and the primary reflecting surfaces 12 of another optical system are arranged continuously so as to be integrated into a single unit in design, thereby making it possible to further enhance the design of the vehicle lamp 1.

In addition, another set of main reflectors 10 is provided so that two sets of main reflectors 10 are disposed vertically of the vehicle lamp 1 across the LEDs 2, 3. Thus, the main reflectors 10 are disposed symmetrically with respect to a straight line which passes through the LEDs 2, 3 horizontally to thereby enhance the design of the vehicle lamp 1.

A transparent inner lens 30 is fixedly supported on the frame 4 in positions lying further forwards to the front of the lamp than the sub-reflectors 20. The inner lens 30 includes lens elements 31 which diffusely project light reflected on the primary reflecting surfaces 11, 12 to the front of the lamp. The lens element 31 is formed into a belt-like shape which corresponds to the main reflectors 10 which are formed into the belt-like shape.

For instance, as shown in Fig. 1, the inner lens 30 may have, when viewed from the front of the lamp, an outer circumferential edge that has a curved portion which becomes closer, in the vertical direction of the lamp, to the light sources 2, 3 than other portions of said circumferential edge.

Said curved portion of the outer circumferential edge of the inner lens 30 may substantially corresponds to the curved portion of the outer circumferential edge of the main reflector 10. In particular, the extremum of the curved portion of the outer circumferential edge of the inner lens 30 and the extremum of the curved portion of the outer circumferential edge of the main reflector 10 may be substantially aligned in the horizontal direction of the vehicle lamp.

The lens element 31 may be divided into a plurality of small lenses, so as to diffuse light efficiently. Additionally, in the case where the lens element 31 is divided into the plurality of small lenses, the lens element 31 can make a good contrast to the main reflectors 10 which are mirror finished to thereby enhance the design of the vehicle lamp 1.

The transparent front cover 40 is provided further forwards to the front of the lamp than the inner lens 30, so as to protect an interior of the lamp.

Further, in this embodiment, as shown in Fig. 3, the primary reflecting surfaces 11, 12 are paraboloidal. Focal points of the primary reflecting surfaces 11, 12 which are paraboloidal are positioned at second focal points F of the secondary reflecting surfaces 21 or in the vicinity thereof, and the lens elements 31 of the inner lens 30 are disposed on axes of the primary reflecting surfaces 11, 12.

According to the vehicle lamp 1 configured in the way that has been described heretofore, light rays can efficiently be emitted to the front of the lamp as indicated by optical paths L1 in Fig. 3. In particular, the LEDs 2, 3 emit light radially. The secondary reflecting surfaces 21, which are ellipsoidal, of the sub-reflectors 20 reflect the light from the LEDs 2, 3, causing the light to pass near the secondary focal points F towards the primary reflecting surfaces 11, 12, which are paraboloidal. The primary reflecting surfaces 11, 12 reflect the light incident thereon to the front of the lamp as parallel light, and the lens elements 31 refract the parallel light so that the light so refracted is then emitted to the front of the lamp as diffuse light.

According to the vehicle lamp 1 of the embodiment that has been described heretofore, light from the LEDs 2, 3 can be made to enter efficiently the main reflectors 10, which are designed into the complex shape such as the belt-like shape by utilizing many curves so as to enhance the design thereof, by the sub-reflectors 20 which include the secondary reflecting surfaces 21 whose secondary focal points F are aligned along the shape corresponding to the shape of the main reflectors 10.

In addition, even in the event that the main reflectors 10 are formed into the free shape as described above, by disposing the LEDs 2, 3 and the sub-reflectors 20 in positions which are not superposed on the main reflectors 10, light from the Lends 2, 3 can be emitted to the front from the main reflectors 10. Consequently, no special space where to dispose the LEDs 2, 3 has to be secured, the degree of freedom in designing the main reflector 10 being thereby enhanced.

Additionally, even in the event that the main reflector 10 is formed into the complex shape, light from the LEDs 2, 3 can be reflected on the main reflectors 10 as designed by the sub-reflectors 20. Thus, light can be emitted to the front from the whole of the main reflectors 10 with as few LEDs 2, 3 as possible.

For example, according to this embodiment, in the vehicle lamp 1 in which the two sets of main reflectors 10 which constitute the different optical systems laid adjacent horizontally are disposed vertically, all the main reflectors 10 can be illuminated brightly by the two LEDs 2, 3. Consequently, the main reflectors 10, which are characteristic of the complex shape and the enhanced design, can be illuminate brightly. Thus, the required number of LEDs 2, 3 is small, and therefore, wiring installed for the LEDs 2, 3 does not have to be complex, and the production cost is not increased unreasonably.

Additionally, light from the LEDs can be reflected to the designed positions efficiently by the secondary reflecting surfaces 21 of the sub-reflectors 20. Therefore, the reflecting surfaces 11, 12 of the main reflectors 10 which are situated away from the LEDs 2, 3 in outer circumferential edge positions (near side walls of the frame 4) of the vehicle lamp 1, for example, can also be illuminated brightly. In this way, the primary reflecting surfaces 11, 2 which are situated in the outer circumferential edge position of the frame 4 can be illuminated brightly without disposing particularly any additional light source.

Further, by allowing light from the LEDs 2, 3 to be reflected to the rear by the sub-reflectors 20 which are disposed in front of the LEDs 2, 3, the main reflectors 10 can be formed on the bottom side of the frame 4, whereby an overall depth dimension of the vehicle lamp 1 can be reduced. Consequently, the vehicle lamp 1 can be provided which the enhanced design and which is compact in size.

Thus, while the invention has been described by reference to the particular embodiment above, the technical scope of the invention is limited to that particular embodiment. It is obvious two those skilled in the art to which the invention pertains that various modification or improvements can be carried out without departing from the scope of the invention.

For example, as shown in the accompanying drawings, an additional LED (which is a particular example of an additional light source) 50 and an additional optical system which constitutes an additional optical member 60 which projects light from the additional LED 50 to the front of the lamp may be disposed on a front side 22 (for instance, the additional light source 50 may be disposed on a reverse side of the secondary reflecting surface 21) of the sub-reflector 20 in front of the main reflector 10 in positions where reflection light from the main reflector 10 is not cut off.

No light from the LEDs 2, 3 enters the front side 22 of the sub-reflector 20. Therefore, neither the additional LED 50 nor the additional optical member 60 cuts off light from the LEDs 2, 3. In addition, the front side 22 of the sub-reflector 20 is visualized from an exterior portion via the front cover 40 and the inner lens 30. Therefore, by disposing the additional optical system on the front side 22 of the sub-reflector 20, the design of the vehicle lamp 1 can be enhanced further.

In this embodiment, as shown in Fig. 2, light emitted from the additional LED 50 is emitted to the front as indicated by a light ray L3. Namely, light emitted from the additional LED 50 is guided to a light guide portion 62 by a light guiding reflecting portion 61 formed into a parabolic plane on the additional optical member 60. The light that has entered the light guide portion 62 is reflected by a plurality of minute reflecting elements 63 formed on a reverse side of the light guide portion 62 which faces the rear of the lamp for emission to the front of the lamp. In this embodiment, by combination of the light guide portion 62 which is formed into a straight line and the curved main reflectors 10, the design of the vehicle lamp 1 is enhanced.

It is to be noted that the additional optical system illustrated is optional and does not necessarily have to be provided. For instance, as an alternative, the front side 22 of the sub-reflector 20 may be mirror finished or matt finished by embossing the front side 22, so that the vehicle lamp 1 is designed to have an external appearance which gives a simple impression to viewers.

Additionally, in the embodiment above, while the lens elements 31 are described as being provided on the inner lens 30, other configuration may of course be adopted in which the lens elements 31 are provided on the front cover 40 or no lens element 31 is provided so that reflection light from the main reflectors 10 is projected directly to the front.

In addition, in the above, while the two sets of main reflectors 10 are described as being disposed axisymmetrically in the vertical direction with respect to the straight line which passes through the LEDs 2, 3, other configurations may of course be adopted in which the number of main reflectors 10 is increased or decreased, a plurality of main reflectors 10 are be disposed point symmetrically, and/or a single main reflector 10 is formed antisymmetrically or point symmetrically, depending upon a design required.

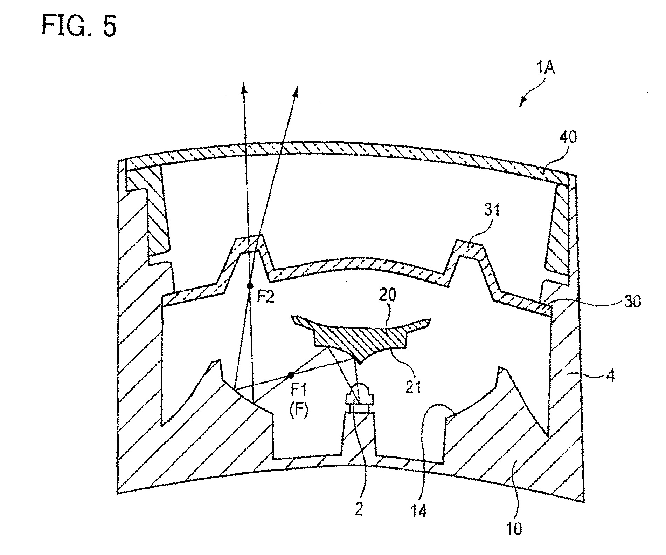

In the embodiment above, while the primary reflecting surfaces 11, 12 are described as being paraboloidal, the invention is not limited thereto. Fig. 5 is a sectional view, similar to Fig. 3, of a vehicle lamp 1A according to a modified example of the invention. Since this modified example is similar to the embodiment that has been described heretofore excluding the fact that primary reflecting surfaces 14 of main reflectors 10 are ellipsoidal, like reference numerals will be given to like members to those described in the embodiment, and the description thereof will be omitted herein.

The primary reflecting surface 14 of the main reflector 10 is formed ellipsoidal. A first focal point F1 of the primary reflecting surface 14 is positioned at a second focal point of a secondary reflecting surface or in the vicinity of the second focal point, and a second focal point F2 is disposed on a lens element 31 of an inner lens 30 or in the vicinity of the lens element 31. It is similar to the embodiment above that the main reflector 10 is formed into a belt-like shape in which a plurality of primary reflecting surfaces 14 are aligned in a linear fashion and that the lens element 31 of the inner lens 30 is formed into a continuous belt-like shape which corresponds to the plurality of primary reflecting surfaces 14 so aligned.

In the vehicle lamp 1A according to the modified example which is configured in the way described above, too, light rays can be emitted to the front of the lamp efficiently as indicated by light rays L2 in Fig. 5. Namely, LEDs 2, 3 emit light radially, and secondary reflecting surfaces 21, which are ellipsoidal, of sub-reflectors 21 reflect light from the LEDs 2, 3, causing it to pass near the first focal points F1 towards the primary reflecting surfaces 14 which are ellipsoidal. The primary reflecting surfaces 14 reflect the light incident thereon, causing it to pass near the second focal points F2 which lie in the vicinity of the lens elements 31 towards the lens elements 31. Then, the lens elements 31 refract the light incident thereon so that the light so refracted is emitted to the front of the lamp as diffuse light.

In this way, according to the vehicle lamp 1A of the modified example of the invention, too, light from the LEDs 2, 3 is allowed to enter the main reflectors 10 efficiently by the sub-reflectors 20 which include the secondary ellipsoidal reflecting surfaces 21 of which the second focal points F are aligned along the shape which corresponds to the main reflectors 10. Consequently, the vehicle lamp 1A can be provided in which the main reflectors 10 which each have the complex shape and the enhanced design can be illuminated brightly with as few the light sources as possible.

## Claims

1. A vehicle lamp (1, 1A) comprising:
at least one light source (2, 3) which emits light to the front of the lamp;
at least one main reflector (10) which includes a plurality of primary reflecting surfaces (11, 12) that are aligned; and
at least one sub-reflector (20) which is disposed in a position lying in front of the light source (2, 3) and which includes a plurality of secondary reflecting surfaces (21),
wherein
the secondary reflecting surfaces (21) are configured to reflect the light from the light source (2, 3) towards the corresponding primary reflecting surfaces (11, 12),
the primary reflecting surfaces (11, 12) are configured to project the reflection light from the sub-reflector (20) to the front of the lamp,
the secondary reflecting surfaces (21) are each ellipsoidal, and
the secondary reflecting surfaces (21) are provided on the sub-reflector (20) so that their respective first focal points positioned at the light source (2, 3) or in the vicinity thereof and their respective second focal points are disposed along a shape which corresponds to the shape of the main reflector (10).

2. The vehicle lamp according to Claim 1, comprising several light sources (2, 3), several main reflectors (10), and several sub-reflectors (20) which form together a plurality of optical systems, each of said optical system comprising one of said light sources (2, 3), one of said main reflectors (10), and one of said sub-reflectors (20), wherein
said main reflectors (10) are disposed adjacent to each other so that their respective primary reflecting surfaces (11, 12) are continuous with each other.

3. The vehicle lamp according to Claim 1 or 2, wherein
the main reflector (10) has a belt-like shape in which the primary reflecting surfaces (11, 12) are disposed in a linear fashion.

4. The vehicle lamp according to any one of Claims 1 to 3, wherein
the primary reflecting surfaces (11, 12) are each paraboloidal, and
respective focal points of the primary reflecting surfaces (11, 12) are each positioned at the corresponding second focal points or in the vicinity of the corresponding second focal points of the secondary reflecting surfaces (21).

5. The vehicle lamp according to Claim 4, comprising a lens member (30) which has a plurality of lens elements (31) which are disposed individually on corresponding axes of the paraboloidal primary reflecting surf aces (11, 12) and which diffusely project reflection light from the primary reflecting surfaces (11, 12) to the front of the lamp.

6. The vehicle lamp according to Claim 5, wherein the lens elements (31) have a continuous belt-like shape which corresponds to the shape of the plurality of primary reflecting surfaces.

7. The vehicle lamp according to any one of Claims 1 to 3, wherein
the primary reflecting surfaces (11, 12) are each ellipsoidal,
respective first focal points of the primary reflecting surfaces (11, 12) are each positioned at the corresponding second focal points or in the vicinity of the corresponding second focal points of the secondary reflecting surfaces (21).

8. The vehicle lamp according to Claim 7, comprising a lens member (30) which has a plurality of lens elements (31) which are disposed at corresponding second focal points of or in the vicinity of the corresponding second focal points of the primary reflecting surfaces (11, 12'), and which diffusely project reflection light from the primary reflecting surfaces (11, 12) to the front of the lamp.

9. The vehicle lamp according to Claim 8, wherein the lens elements (31) have a continuous belt-like shape which corresponds to the shape of the plurality of primary reflecting surfaces.

10. The vehicle lamp according to any one of Claims 1 to 9, comprising:
an additional light source (50) and an additional optical member (60) which projects light from the additional light source (50) to the front of the lamp, said additional light source (50) and additional optical member (60) being provided in front of the main reflector (10) in a position where reflection light from the main reflector is not cut off.
